# EUROPÄISCHE PATENTSCHRIFT

(11) **EP 0 668 007 B1**
(45) Veröffentlichungstag und Bekanntmachung des Hinweises auf die Patenterteilung: **19.12.2001**
(21) Anmeldenummer: 94924969.2
(22) Anmeldetag: 07.09.1994
(51) Int. Cl.: H04R 3/00, H04R 3/04, H04M 1/60, H04M 1/19

(54) **MOBILFUNKGERÄT MIT FREISPRECHEINRICHTUNG**
MOBILE RADIOTELEPHONE SET WITH HANDSFREE DEVICE
APPAREIL RADIOTELEPHONIQUE MOBILE A DISPOSITIF MAINS LIBRES

(30) Priorität: 07.09.1993 DE 4330143
(43) Veröffentlichungstag der Anmeldung: 23.08.1995
(73) Patentinhaber: Koninklijke Philips Electronics N.V., 5621 BA Eindhoven (NL); Philips Corporate Intellectual Property GmbH, 52064 Aachen (DE)
(72) Erfinder: MARTIN, Rainer, D-52064 Aachen (DE); JANSE, Kees, NL-5616 BM Eindhoven (NL); KNIBBLER, Charles, NL-5161 BR Eindhoven (NL); KELLERMANN, Walter, D-90542 Eckental (DE)
(74) Vertreter: Walz, Erich
(86) Internationale Anmeldenummer: IB9400265
(87) Internationale Veröffentlichungsnummer: WO9507597

(56) Entgegenhaltungen:
- EP-A- 0 311 754
- EP-A- 0 415 897
- EP-A- 0 545 731
- WO-A-91/11060
- US-A- 4 381 428
- US-A- 4 669 120

## Beschreibung

Die Erfindung betrifft ein Mobilfunkgerät mit einer Freisprecheinrichtung, die Kombinationsmittel zur Kombination von mindestens zwei akustischen Eingangssignalen und ein adaptives Filter zur Filterung des kombinierten Ausgangssignals der Kombinationsmittel aufweist.

Die Erfindung betrifft weiter eine separate Freisprecheinrichtung, die Kombinationsmittel zur Kombination von mindestens zwei akustischen Eingangssignalen und ein adaptives Filter zur Filterung des kombinierten Ausgangssignals der Kombinationsmittel aufweist.

Eine Freisprecheinrichtung mit vier Mikrofonen ist beispielsweise aus "A MICROPHONE ARRAY WITH ADAPTIVE POSTFILTERING FOR NOISE REDUCTION IN REVERBERANT ROOM", Rainer Zelinski, ICASSP 88, Seiten 2578 bis 2581, bekannt. In einem ersten Verarbeitungsschritt wird der Richtungsgewinn der zweidimensional angeordneten Mikrofone zur Geräuschreduzierung benutzt. In einem zweiten Verarbeitungsschritt werden die Mikrofonsignale mittels eines adaptiven Wienerfilters, welches das Sprachsignal schätzt, nachbearbeitet. Zur Berechnung der Parameter des Wienerfilters werden die Autokorrelationsfunktion und die Kreuzkorrelationsfunktion der Eingangssignale bestimmt.

Zur Störsignalverminderung von Mikrofonsignalen ist aus EP 0 545 731 A1 eine Anordnung mit zwei nahe aneinander angeordneten Mikrofonen und einer adaptiven Störsignalunterdrückungsschaltung bekannt, bei dem eines der Mikrofonsignale als Haupteingangssignal einem adaptiven Filter zugeführt ist. Durch Subtraktion des anderen Mikrofonsignal vom Haupteingangssignal wird ein Referenzsignal zur Steuerung des adaptiven Filters gewonnen. Zur Verbesserung der Qualität des Ausgangssignals ist in einer Ausführungsform vorgesehen, des analoge Haupteingangssignal hochpassgefiltert dem analogen Ausgangssignal des adaptiven Filters zuzusetzen.

Eine Anordnung zur Echounterdrückung für Freisprecheinrichtungen in Mobilfunkgeräten mit nur einem Mikrofon ist aus WO 91/11060 bekannt. Bei dieser Echounterdrückungsschaltung wird das Mikrofonsignal nach Analog-Digital-Umsetzung auf verschiedene Freuquenzbänder aufgeteilt. Für jedes Frequenzband ist jeweils ein eigenes adaptives Filter vorgesehen.

Schließlich ist aus EP 0 311 754 A2 eine Konferenz-Freisprecheinrichtung mit mehreren Mikrofonen und einer Steuerschaltung zur Steuerung der Durchschaltung jeweils nur eines der Mikrofonsignale bekannt, bei der nach einer mikrofonindividuellen Bandpaßfilterung im Bereich der Sprachgrundfrequenz aus einem raumgeräusch-abhängig geregelten Mikrofon-Summensignal die Einhüllende von Sprache detektiert wird und die bandpaßgefilterten Mikrofonsignale bezüglich ihres Pegels überwacht werden. Hierbei wird jeweils in Abhängigkeit vom Detektionssignal der Einhüllenden von Sprache das Mikrofonsignal mit dem höchsten Pegel zur Durchschaltung ausgewählt.

Der Erfindung liegt die Aufgabe zugrunde, bei einem Mobilfunkgerät sowie bei einer Freisprecheinrichtung der eingangs genannten Art die Sprachqualität zu verbessern.

Diese Aufgabe wird bei einem Mobilfunkgerät sowie bei einer Freisprecheinrichtung der eingagns genannten Art, dadurch gelöst, daß ein im Eingangszweig des adaptiven Filter angeordnetes Hochpaßfilter zur Filterung der akustischen Eingangssignale vorgesehen ist.

Die Erfindung geht von der Erkenntnis aus, daß durch den hohen Störanteil in den Mikrofonsignalen, d.h. den akustischen Eingangssignalen in einem Kraftfahrzeug bei der Berechnung der Parameter für das adaptive Filter verschiedenen unerwünschte Effekte auftreten, die zu einer Verschlechterung der Sprachqualität des Ausgangssignals führen. Zur Verarbeitung der beispielsweise von einer als Mikrofonarray ausgebildeten Mikrofongruppe kommenden akustischen analogen Eingangssignale werden diese beispielsweise zunächst mit Hilfe von A/D-Wandlern in Digitalsignale umgewandelt. Die nachfolgenden Kombinationsmittel dienen dazu, die so erhaltenen digitalen Eingangssignale in ein möglichst störungsfreies Ausgangssignal zu vereinigen. Das nach den Kombinationsmitteln angeordnete adaptive Filter dient einer Reduzierung von Störgeräuschen, die bei einer in einem Kraftfahrzeug angeordneten Freisprecheinrichtung beispielsweise durch Motorgeräusche in vielfältiger Weise vorhanden sind. Vor allem eine Verwendung von hochwertigen Mikrofonen kann eine Verschlechterung des Ausgangssignals der Freisprecheinrichtung zur Folge haben. Durch die Hochpaßfilterung der akustischen Eingangssignale wird in überraschend einfacher Weise ereicht, daß derartige Effekte reduziert werden. Als Hochpaßfilter kann beispielsweise ein digitales IIR-Filter 4. Ordnung verwendet werden. Durch eine derartige Hochpaßfilterung der Eingangssignale entfällt die auf die niederfrequenten Anteile der Eingangssignale zurückzuführende schlechtere Signalverarbeitung der Freisprecheinrichtung, so daß insgesamt eine Verbesserung der Sprachqualität des Ausgangssignals der Freisprecheinrichtung des Mobilfunkgeräts erzielt wird. Hierdurch wird eine Ausfilterung der relativ hohen Signalenergie des Niederfrequenzbereiches, die sich hauptsächlich aus Störsignalen zusammensetzt, und damit eine Verbesserung der Sprachqualität der Freisprecheinrichtung und damit des Mobilfunkgeräts bewirkt.

Eine verbesserte Sprachqualität der Freisprecheinrichtung des Mobilfunkgeräts kann dann erzielt werden, wenn die Grenzfrequenz des Hochpaßfilters im Bereich von 200 bis 400 Hz liegt. Insbesondere bei einer Grenzfrequenz des Hochpaßfilters von 300 Hz konnte eine wesentliche Verbesserung des Ausgangssignals erzielt werden, da für die für ein Mobilfunkgerät relevante Telefonsprache Frequenzen unterhalb von 300 Hz ohnehin keine Rolle spielen.

Eine weitere Verbesserung der Sprachqualität der Freisprecheinrichtung kann dadurch sichergestellt werden, daß ein weiteres Hochpaßfilter zur Filterung des Ausgangssignals des adaptiven Filters vorgesehen ist. Durch die weitere Hochpaßfilterung können weitere niederfrequente Störsignalanteile, die vom adaptiven Filter nicht hinreichend unterdrückt worden sind, verringert werden. Dem liegt die Erkenntnis zugrunde, daß sich bedingt durch die Zeitvarianz des adaptiven Filters zusätzliche Artefakte bilden, deren Energie auf den unteren Frequenzbereich konzentriert ist, selbst wenn die Eingangssignale keine niederfrequenten Signalanteile enthalten. Durch die weitere Hochpaßfilterung werden diese niederfrequenten Signalanteile bedämpft und gleichzeitig die höheren Signalfrequenzen angehoben, so daß ein ansonsten als Fehlreaktion durch eine Bedämpfung der hochfrequenten Signalanteile auftretender dumpfer Höreindruck vermieden wird.

Eine weiter verbesserte Sprachqualität der Freisprecheinrichtung des Mobilfunkgeräts kann dann erzielt werden, wenn die Grenzfrequenz des weiteren Hochpaßfilters im Bereich von 200 bis 400 Hz liegt. Insbesondere bei einer Grenzfrequenz des weiteren Hochpaßfilters von 300 Hz konnte eine wesentliche Verbesserung des Ausgangssignals erzielt werden.

Eine Berücksichtigung von Laufzeitunterschieden der durch beispielsweise ein Mikrofonarray aufgenommenen akustischen Eingangssignale kann auf einfache Weise dadurch erfolgen, daß die Kombinationsmittel eine Laufzeitausgleichseinrichtung zum Ausgleich der Laufzeiten zwischen den Eingangssignalen aufweisen. Hierzu ist die Laufzeitausgleichseinrichtung insbesondere vor einer Summiereinrichtung der Einganssignale angeordnet und dient dem Ausgleich der auf dem Zeitversatz zwischen den Sprachsignalanteilen der akustischen Eingangssignale, d.h. der Mikrofonsignale beruhenden Laufzeitunterschiede.

Eine weitere Verbesserung der Sprachqualität kann dadurch erzielt werden, daß die Laufzeitausgleichsgseinrichtung Plausibilitätsprüfungsmittel aufweist, die dazu vorgesehen sind, zu prüfen, ob eine festgestellte Entfernung und/oder Richtung des Ausgangspunkts der Eingangssignale zu einem Sprecher einen vorgebbaren Grenzwert überschreitet. Eine derartge Plausibilitätsprüfung untersucht, ob bei der Fokussierung auf einen Sprecher eine festgestellte Entfernung zum Sprecher der vorgegebenen Grenzwert überschritten wird, wobei dieser Grezwert entsprechend den inneren Abmessungen des Kraftfahrzeugs wählbar ist. Dabei kann bei der Plausibilitätsprüfung zusätzlich auch noch die Richtung, aus der die Eingangssignale aufgenommen werden mit einbezogen werden, wodurch falsche, d.h. nicht mögliche Sprecherorte, beispielsweise ein Sprecherort hinter den Mikrofonen ausgeschlossen werden kann.

Eine insbesondere durch fehlerhaft geschätzte Korrelationsfunktionen und/oder numerische Probleme auftretende schlechte Sprachqualität kann dadurch verbessert werden, daß die Freisprecheinrichtung eine Einrichtung zur Berechnung der Parameter des adaptiven Filters aus der Autokorrelationsfunktion und der Kreuzkorrelationsfunktion der Eingangssignale aufweist, wobei insbesondere eine zeitliche Mittelung der Autokorrelationfunktion und/oder der Kreuzkorrelationsfunktion vorgesehen ist.

Eine vorteilhafte Möglichkeit zur Berechnung der Kreuzkorrelationsfunktion besteht darin, daß eine Skalierung der Autokorrelationsfunktion und eine Beaufschlagung der Kreuzkorrelationsfunktion mit der Autokorrelationsfunktion vorgesehen ist.

Störende Effekte beim Freisprechen können auf einfache Weise weiter dadurch reduziert werden, daß die Freisprecheinrichtung Schaltmittel aufweist, die vorgesehen sind, im Falle eines Koeffizientenüberlaufs bei der Berechnung der Autokorrelationsfunktion und/oder der Kreuzkorrelationsfunktion, das adaptive Filter nicht zu benutzen.

Als geeignetes Filter für das adaptive Filter kann ein Wienerfilter verwendet werden.

Im folgenden wird die Erfindung anhand der in den Figuren dargestellten Ausführungsbeispiele näher erläutert. Es zeigen:
- Fig. 1: den Ausschnitt eines Kraftfahrzeugs mit einer schematisch dargestellten Freisprecheinrichtung und
- Fig. 2: ein Ausführungsbeispiel einer Freisprecheinrichtung.

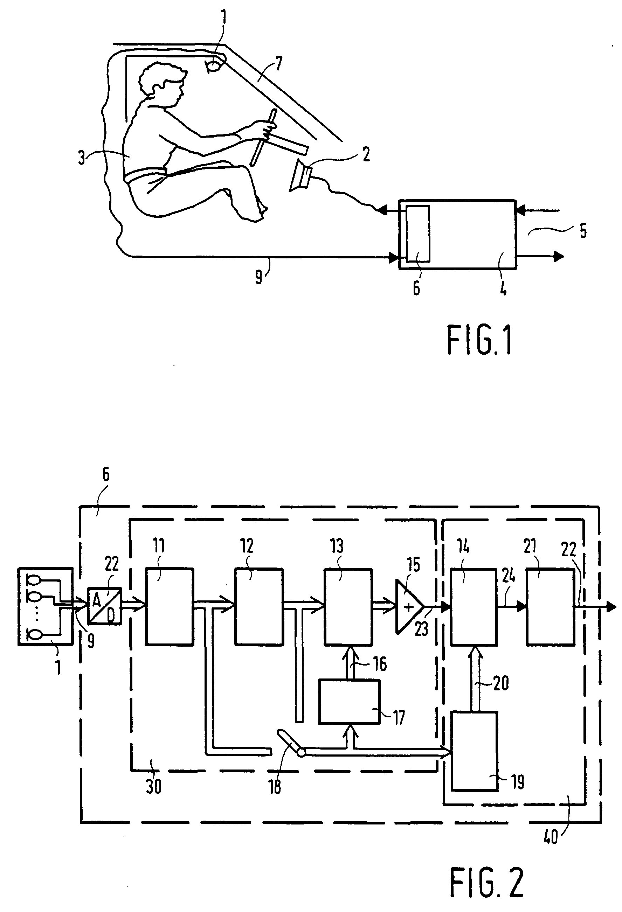

Fig. 1 zeig schematisch einen Ausschnitt eines Kraftfahrzeugs 7 mit einem Fahrer 3. Weiterhin ist in Fig. 1 dargestellt, daß im Kraftfahrzeug 7 ein Mobiltelefon 4 mit einer Freisprecheinrichtung 6 angeordnet ist, wobei die Freisprecheinrichtung 6 das von einem fernen Teilnehmer empfangene Signal über einen Lautsprecher 2 in die akustische Umgebung, d.h. ins Innere des Kraftfahrzeugs 7 abstrahlt und so für den lokalen Teilnehmer 3 hörbar ist ("laut hören"). Oberhalb des Sprechers 3 ist dem Kraftfahrzeug 7 eine Mikrofongruppe 1 angeordnet, die die Sprache des Fahrers 3 und andere akustische Signale aus der Umgebung aufnimmt, um sie als akustische Eingangssignale 9 über die Freisprecheinrichtung 6 und das Mobilfunkgerät 4 zu einem mit dem Mobilfunkgerät 4 über einen Funkkanal 5 in Verbindung stehenden fernen Teilnehmer übertragen zu können ("Freisprechen"), wobei im folgenden vereinfachend unter "Freisprechen" stets die Zusammenfassung der beiden Funktionen "Laut hören" und "Freisprechen" verstanden wird. Die im Kraftfahrzeug angeordnete Freisprecheinrichtung 6 kann sowohl Bestandteil des Mobilfunkgeräts 4 selbst sein, als auch als separate Einrichtung mit dem Mobilfunkgerät 4 verbunden sein. Die weiteren für den Betrieb eines Mobilfunkgeräts üblichen Teile sind aus Gründen der Übersichtlichkeit bei dem in Fig. 1 dargestellten Ausführungsbeispiel nicht gezeigt.

Beim Freisprechen in einem Kraftfahrzeug treten grundsätzliche Probleme auf. Zum einen nimmt das Mikrofon 1 bzw. die Mikrofonengruppe 1 außer dem erwünschten Sprachsignal des Sprechers 3 auch andere Signale aus der akustischen Umgebung mit auf, die im Hinblick auf die verfügbaren technischen Lösungen in zwei Klassen eingeteilt werden können. Dies sind zum einen das akustische Echo des Lautsprechersignals und zum anderen die lokalen Geräusche, die beispielsweise von Motor, Lüftung, Reifen, Wind, Regen, etc. verursacht werden können. Diese Signale wirken als Störung auf das eigentliche Nutzsignal, d.h. die Sprache des lokalen Teilnehmers 3 und können damit die Sprachqualität der über das Mobilfunkgerät 4 über den Funkkanal 5 bestehenden Telefonverbindung entscheidend beeinflussen. Sie verschlechtern die Verständlichkeit des Nutzsignals und beeinträchtigen auch bei Anwendung von Sprachcodierverfahren deren Qualität. So nimmt auch die Beeinträchtigung mit der Reduktion der Übertragungsbitrate zu, z.B. bei GSM-Codecs und es wird auch die Erkennungsrate von Spracherkennern, welche beispielsweise zur sprachgesteuerten Bedienung des Mobiltelefons 4 vorgesehen sein können verringert. Für den eigentlichen über das Mobilfunkgerät 4 zustandekommenden Fernsprechbetrieb sind die beiden erst genannten Auswirkungen bedeutsam, wobei diese nur dem fernen Teilnehmer unmittelbar bewußt werden. So wird der ferne Teilnehmer das Echo seiner eigenen Sprache hören (ab etwa 30 ms Signallaufzeit, d.h. bei GSM mit ca. 180 ms Laufzeit um so ausgeprägter) und er wird die Auswirkungen der lokalen Geräusche als verringerte Sprachqualität wahrnehmen. Auf den lokalen Teilnehmer 3 ergeben sich nur dann Rückwirkungen, wenn durch die Rückkoppelung des Lautsprechersignals zum Mikrofon 1 Stabilitätsprobleme in der Fernsprechverbindung auftreten. Bei Spracherkennungsfunktionen, z.B. bei der Sprachsteuerung des Mobiltelefons 4 werden dem lokalen Teilnehmer die Auswirkungen der Störungen unmittelbar durch die Verschlechterung der Erkennungsraten verdeutlicht.

Der lokale Teilnehmer 3 hört neben dem erwünschten Lautsprechersignal 2 und den entsprechenden Echos natürlich zusätzlich die lokalen Geräusche, so daß bei hohen Nebengeräuschpegel der Höreindruck und die Verständlichkeit entsprechend beeinträchtigt werden. Zur Entfernung der lokalen Geräusche aus den Mikrofonsignalen 1 sind verschiedene Konzepte zur Geräuschreduktion anwendbar. Im Prinzip wird dabei immer versucht, das Nutzsignal und das Störsignal getrennt zu analysieren und auf der Basis der ermittelten Eigenschaften das Störsignal zu unterdrücken, ohne gleichzeitig das Nutzsignal zu beeinträchtigen.

Fig. 2 zeigt ein Ausführungsbeispiel einer Freisprecheinrichtung 6, wie sie beispielsweise im Zusammenhang mit oder in einem in Fig. 1 dargestellten Mobilfunkgerät 4 verwendet werden kann (vgl. Fig. 1). Die in Fig. 2 dargestellte Freisprecheinrichtung 6 besteht aus einer beispielsweise als Mikrofonarray ausgebildeten Mikrofongruppe 1, deren von den einzelnen Mikrofonen aufgenommenen aktustischen Eingangssignale 9 über einen Analogdigitalwandler 22 einem Hochpaßfilter 11 zur Filterung der Eingangssignale 9 zugeführt werden. Das Hochpaßfilter 11 gehört zu Kombinationsmitteln 30, die zur Kombination der Eingangssignale 9 vorgesehen sind, wobei die Kombinationsmittel 30 weiterhin eine Einrichtung 12 zur optimalen Gewichtung der Eingangssignale, eine Laufzeitausgleichseinrichtung 13, eine Laufzeitschätzeinrichtung 17 sowie eine Summiereinrichtung 15 aufweisen. Ein am Ausgang der Kombinationsmittel 30 anliegendes kombiniertes Eingangsignal 23 wird einem adaptiven Filter 14 zugeführt, das zusammen mit der Filterschätzeinrichtung 19 die Filtermittel 40 der Freisprecheinrichtung 6 bildet. Zur Filterung des Ausgangsignals 23 des adaptiven Filters 14 ist darüberhinaus ein weiteres Hochpaßfilter 21 vorgesehen, welches das Ausgangssignal 22 der Freisprecheinrichtung 6 liefert. Bei dem in Fig. 2 dargestellten Ausführungsbeispiel einer Freisprecheinrichtung 6 wurden nur die im Zusammenhang mit der Erfindung relevanten Teile der Freisprecheinrichtung dargestellt, auf eine Darstellung der übrigen Teile einer üblichen Freisprecheinrichtung wurde aus Gründen der Übersichtlichkeit verzichtet.

Die mit Hilfe der Mikrofongruppe 1 aufgenommenen akustischen Eingangssignale 9 werden zunächst mit Hilfe von Umwandlungsmitteln 22 (A/D-Wandlern) in Digitalsignale umgewandelt. Die nachfolgenden Kombinationsmittel 40 dienen dazu, die so erhaltenen digitalen Eingangssignale in ein möglichst störungsfreies Ausgangssignal 23 umzuwandeln, dessen Qualität mit Hilfe der anschließenden Filtermittel 40 weiter verbessert werden soll. Hierzu wird bei der in Fig. 2 dargestellten Freisprecheinrichtung 6 mit Hilfe des Hochpaßfilters 11 zunächst eine Hochpaßfilterung der digitalisierten Eingangssignale 9 durchgeführt, wodurch in überraschend einfacher Weise Störungen der akustischen Eingangssignale 9 reduziert werden können. Ein derartiges Hochbaßfilter kann beispielsweise als digitales IIR-Filter (Infinite Impulse Response) 2. bis 4. Ordnung ausgebildet sein. Als Grenzfrequenz des Hochpaßfilters 11 wird beispielsweise 300 Hz verwendet. Frequenzen unterhalb von 300 Hz spielen für die zu verarbeitenden Sprachsignale für ein Mobilfunkgerät und die daraus entstehende Telefonsprache keine Rolle. Mit Hilfe der Einrichtung 12 werden die hochpaßgefilterten Eingangssignale in bekannter Weise optimal gewichtet, wobei die hochpaßgefilterten Eingangssignale am Ausgang des Hochpaßfilters 11 auch zu einer Laufzeitenschätzung für die Laufzeitschätzeinrichtung 16 sowie für die Filterschätzeinrichtung 19 zur Schätzung der Parameter 20 des adaptiven Filters 14 herangezogen werden.

Vor einer Kombination der Eingangssignale mit Hilfe der Summiereinrichtung 15 wird bei dem in Fig. 2 dargestellten Ausführungsbeispiel der Freisprecheinrichtung 6 darüberhinaus mit Hilfe der Laufzeitausgleichseinrichtung 13 ein Ausgleich der Laufzeiten zwischen den Eingangssignalen 9 der Mikrofongruppe 1 erzielt. Hierzu weist die Laufzeitausgleichseinrichtung 13 Plausibilitiätsprüfmittel auf, die dazu vorgesehen sind, zu prüfen, ob eine festgestellte Entfernung des Ausgangspunkts der Eingangssignale 9 zu einem Sprecher einen vorgebbaren Grenzwert überschreitet. Eine derartige Plausibilitätsprüfungseinrichtung untersucht daher, ob bei der Fokussierung auf einen Sprecher die festgestellte Entfernung zum Sprecher einen vorgegebenen Grenzwert überschreitet. Dieser Grenzwert ist entsprechend den inneren Abmessungen des Kraftfahrzeugs wählbar. Beispielsweise würden Entfernungen über einen Meter bedeuten, daß sich der Sprecher außerhalb des Fahrzeugs befinden müßte. Zusätzlich kann bei einer derartigen Plausibilitätsprüfung auch die Richtung der Eingangssignale mit einbezogen werden. Hierdurch können angebliche Sprecherorte zum Beispiel hinter den Mikrofonen, also in Richtung der Windschutzscheibe als unwahrscheinlich erkannt werden, ebenso angebliche Sprecherpositionen links vor der Fahrerposition. Bei Erkennung einer unwahrscheinlichen Sprecherposition wird vorzugsweise die letzte plausible Sprecherposition, bzw. die entsprechenden früheren Schätzwerte verwendet. Dies kann mit Hilfe der in Fig. 2 in den Kombinationsmitteln 30 enthaltenen Schaltmittel 18 sichergestellt werden. Das Mikrofonarray 1 mit dem nachfolgenden Laufzeitausgleich ermöglicht durch seine räumliche Selektivität somit eine Trennung von Nutz und Störanteilen der Eingangssignale 9. Gleichzeitig wird bei Fokusierung auf die Nutzsignalquelle und Mittelung der einzelnen Mikrofonsignale 9 ein zusätlicher Arraygewinn erzielt, wenn die Störanteile in den Mikrofonsignalen wechselseitig unkorreliert sind und sich deshalb bei der Summation teilweise auslöschen.

Das nachgeschaltete adaptive Filter 14 der Filtermittel 40 hat die Aufgabe, die Nutzanteile des Kombinationssignals 23 herauszuheben und die verbleibenden Störsignale zusätzlich zu unterdrücken. Hierzu werden die Autokorrelationsfunktion und die Kreuzkorrelationsfunktion der Eingangssignale 9 als Parameter für das beispielsweise als Wienerfilter ausgebildete adaptive Filter 14 über die Filterschätzeinrichtung 19 berechnet. Weiter ist vorgesehen, zu prüfen, ob während der Berechnung von Autokorrelationsfunktion und/oder Kreuzkorrelationsfunktion ein Koeffizientenüberlauf vorgekommen ist, und in diesem Fall das adaptive Filter 14 nicht zu benutzen. Dies kann durch die Schaltmittel 18 bewirkt werden. Das am Ausgang des adaptiven Filters 14 vorliegende Signal 24 kann durch das weitere Hochpaßfilter 21 die in diesem Signal enthaltenen nie erfrequenten Störsignalanteile, die von adaptiven Filter 14 nicht hinreichend unterdrückt wurden, herausfiltern, so daß das Ausgangssignal 22 der Freisprecheinrichtung 6 eine nochmals erhöhte Sprachqualität aufweist.

## Patentansprüche

1. Mobilfunkgerät mit einer Freisprecheinrichtung (6), die Kombinationsmittel (30) zur Kombination von mindestens zwei akustischen Eingangssignalen (9) und ein adaptives Filter (14) zur Filterung des kombinierten Ausgangssignals (23) der Kombinationsmittel (30) aufweist,
**dadurch gekennzeichnet,**
**daß** ein im Eingangszweig des adaptiven Filters (14) angeordnetes Hochpaßfilter (11) zur Filterung der akustischen Eingangssignale (9) vorgesehen ist.

2. Mobilfunkgerät nach Anspruch 1,
**dadurch gekennzeichnet,**
**daß** die Grenzfrequenz des Hochpaßfilters (11) im Bereich von 200 bis 400 Hz liegt.

3. Mobilfunkgerät nach einem der Ansprüche 1 oder 2,
**dadurch gekennzeichnet,**
**daß** ein weiteres Hochpaßfilter (21) zur Filterung des Ausgangssignals (23) des adaptiven Filters (14) vorgesehen ist.

4. Mobilfunkgerät nach einem der Ansprüche 1 bis 3,
**dadurch gekennzeichnet,**
**daß** die Grenzfrequenz des weiteren Hochpaßfilters (21) im Bereich von 200 bis 400 Hz liegt.

5. Mobilfunkgerät nach einem der Ansprüche 1 bis 4,
**dadurch gekennzeichnet,**
**daß** die Kombinationsmittel (30) eine Laufzeitausgleichseinrichtung (13) zum Ausgleich der Laufzeiten zwischen den Eingangssignalen (9) aufweisen.

6. Mobilfunkgerät nach einem der Ansprüche 1 bis 5,
**dadurch gekennzeichnet,**
**daß** die Laufzeitausgleichsgseinrichtung (13) Plausibilitätsprüfungsmittel aufweisen, die dazu vorgesehen sind, zu prüfen, ob eine festgestellte Entfernung und/oder Richtung des Ausgangspunkts der Eingangssignale (9) zu einem Sprecher (3) einen vorgebbaren Grenzwert überschreitet.

7. Mobilfunkgerät nach einem der Ansprüche 1 bis 6,
**dadurch gekennzeichnet,**
**daß** die Freisprecheinrichtung (6) eine Einrichtung (11) zur Berechnung der Parameter (20) des adaptiven Filters (14) aus der Autokorrelationsfunktion und der Kreuzkorrelationsfunktion der Eingangssignale (9) aufweist, wobei insbesondere eine zeitliche Mittelung der Autokorrelationfunktion und/oder der Kreuzkorrelationsfunktion vorgesehen ist.

8. Mobilfunkgerät nach einem der Ansprüche 1 bis 7,
**dadurch gekennzeichnet,**
**daß** zur Berechnung der Kreuzkorrelationsfunktion eine Skalierung der Autokorrelationsfunktion und eine Beaufschlagung der Kreuzkorrelationsfunktion mit der Autokorrelationsfunktion vorgesehen ist.

9. Mobilfunkgerät nach einem der Ansprüche 1 bis 8,
**dadurch gekennzeichnet,**
**daß** die Freisprecheinrichtung Schaltmittel (18) aufweisen, die vorgesehn sind, im Falle eines Koeffizientenüberlaufs bei der Berechnung der Autokorrelationsfunktion und/oder der Kreuzkorrelationsfunktion, das adaptive Filter nicht zu benutzen.

10. Mobilfunkgerät nach einem der Ansprüche 1 bis 9,
**dadurch gekennzeichnet,**
**daß** das adaptive Filter (14) ein Wienerfilter ist.

11. Freisprecheinrichtung (6), die Kombinationsmittel (30) zur Kombination von mindestens zwei akustischen Eingangssignalen (9) und ein adaptives Filter (14) zur Filterung des kombinierten Ausgangssignals (23) der Kombinationsmittel (30) aufweist,
**dadurch gekennzeichnet,**
**daß** ein im Eingangszweig des adaptiven Filters (14) angeordnetes Hochpaßfilter (11) zur Filterung der akustischen Eingangssignale (9) vorgesehen ist.

12. Freisprecheinrichtung nach Anspruch 11,
**dadurch gekennzeichnet,**
**daß** die Grenzfrequenz des Hochpaßfilters (11) im Bereich von 200 bis 400 Hz liegt.

13. Freisprecheinrichtung nach einem der Ansprüche 11 oder 12,
**dadurch gekennzeichnet,**
**daß** ein weiteres Hochpaßfilter (21) zur Filterung des Ausgangssignals (23) des adaptiven Filters (14) vorgesehen ist.

14. Freisprecheinrichtung nach einem der Ansprüche 11 bis 13,
**dadurch gekennzeichnet,**
**daß** die Grenzfrequenz des weiteren Hochpaßfilters (21) im Bereich von 200 bis 400 Hz liegt.

15. Freisprecheinrichtung nach einem der Ansprüche 11 bis 14,
**dadurch gekennzeichnet,**
**daß** die Kombinationsmittel (30) eine Laufzeitausgleichseinrichtung (13) zum Ausgleich der Laufzeiten zwischen den Eingangssignalen (9) aufweisen.

16. Freisprecheinrichtung nach einem der Ansprüche 11 bis 15,
**dadurch gekennzeichnet,**
**daß** die Laufzeitausgleichsgseinrichtung (13) Plausibilitätsprüfungsmittel aufweisen, die dazu vorgesehen sind, zu prüfen, ob eine festgestellte Entfernung und/oder Richtung des Ausgangspunkts der Eingangssignale (9) zu einem Sprecher (3) einen vorgebbaren Grenzwert überschreitet.

17. Freisprecheinrichtung nach einem der Ansprüche 11 bis 16,
**dadurch gekennzeichnet,**
**daß** die Freisprecheinrichtung (6) eine Einrichtung (11) zur Berechnung der Parameter (20) des adaptiven Filters (14) aus der Autokorrelationsfunktion und der Kreuzkorrelationsfunktion der Eingangssignale (9) aufweist, wobei insbesondere eine zeitliche Mittelung der Autokorrelationfunktion und/oder der Kreuzkorrelationsfunktion vorgesehen ist.

18. Freisprecheinrichtung nach einem der Ansprüche 11 bis 17,
**dadurch gekennzeichnet,**
**daß** zur Berechnung der Kreuzkorrelationsfunktion eine Skalierung der Autokorrelationsfunktion und eine Beaufschlagung der Kreuzkorrelationsfunktion mit der Autokorrelationsfunktion vorgesehen ist.

19. Freisprecheinrichtung nach einem der Ansprüche 11 bis 18,
**dadurch gekennzeichnet,**
**daß** die Freisprecheinrichtung Schaltmittel (18) aufweisen, die vorgesehn sind, im Falle eines Koeffizientenüberlaufs bei der Berechnung der Autokorrelationsfunktion und/oder der Kreuzkorrelationsfunktion, das adaptive Filter nicht zu benutzen.

20. Freisprecheinrichtung nach einem der Ansprüche 11 bis 19,
**dadurch gekennzeichnet,**
**daß** das adaptive Filter (14) ein Wienerfilter ist.

## Claims

1. A mobile radiotelephone set with a handsfree device (6), which handsfree device (6) comprises combining means (30) for combining at least two acoustic input signals (9), and an adaptive filter (14) for filtering the combined output signal (23) of the combining means (30),
**characterized**
**in that** a high-pass filter (11) for filtering the acoustic input signals (9) is provided in the input branch of the adaptive filter (14).

2. A mobile radiotelephone set as claimed in Claim 1,
**characterized**
**in that** the limit frequency of the high-pass filter (30) lies in the range from 200 to 400 Hz.

3. A mobile radiotelephone set as claimed in one of the Claims 1 or 2,
**characterized**
**in that** a further high-pass filter (21) is provided for filtering the output signal (23) of the adaptive filter (14).

4. A mobile radiotelephone set as claimed in one of the Claims 1 to 3,
**characterized**
**in that** the limit frequency of the further high-pass filter (21) lies in the range from 200 to 400 Hz.

5. A mobile radiotelephone set as claimed in one of the Claims 1 to 4,
**characterized**
**in that** the combining means (30) comprise a delay equalization circuit (13) for equalizing the delays between the input signals (9).

6. A mobile radiotelephone set as claimed in one of the Claims 1 to 5,
**characterized**
**in that** the delay equalization circuit (13) comprises plausibility examining means provided for examining whether a defined distance and/or direction from the starting point of the input signals (9) to a speaker (3) exceeds a predeterminable limit value.

7. A mobile radiotelephone set as claimed in one of the Claims 1 to 6,
**characterized**
**in that** the handsfree device (6) comprises an arrangement (11) for computing the parameters (20) of the adaptive filter (14) from the autocorrelation function and the cross-correlation function of the input signals (9), while especially the autocorrelation function and/or cross-correlation function are averaged with time.

8. A mobile radiotelephone set as claimed in one of the Claims 1 to 7,
**characterized**
**in that** for computing the cross-correlation function the autocorrelation function is scaled and the cross-correlation function is affected by the autocorrelation function.

9. A mobile radiotelephone set as claimed in one of the Claims 1 to 8,
**characterized**
**in that** the handsfree device comprises switching means (18) which are provided for not using the adaptive filter when there is a coefficient overflow during the computation of the autocorrelation function and/or the cross-correlation function.

10. A mobile radiotelephone set as claimed in one of the Claims 1 to 9,
**characterized**
**in that** the adaptive filter (14) is a Wiener filter.

11. A handsfree device (6) comprising combining means (30) for combining at least two acoustic input signals (9), and an adaptive filter (14) for filtering the combined output signal (23) of the combining means (30),
**characterized**
**in that** a high-pass filter (11) for filtering the acoustic input signals (9) is provided in the input branch of the adaptive filter (14).

12. A handsfree device as claimed in Claim 11,
**characterized**
**in that** the limit frequency of the high-pass filter (11) lies in the range from 200 to 400 Hz.

13. A handsfree device as claimed in one of the Claims 11 or 12,
**characterized**
**in that** a further high-pass filter (21) is provided for filtering the output signal (24) of the adaptive filter (14).

14. A handsfree device as claimed in one of the Claims 11 to 13,
**characterized**
**in that** the limit frequency of the further high-pass filter (21) lies in the range from 200 to 400 Hz.

15. A handsfree device as claimed in one of the Claims 11 to 14,
**characterized**
**in that** the combining means (30) comprise a delay equalization circuit (13) for equalizing the delays between the input signals (9).

16. A handsfree device as claimed in one of the Claims 11 to 15,
**characterized**
**in that** the delay equalization circuit (13) comprises plausibility examining means provided for examining whether a defined distance and/or direction from the starting point of the input signals (9) to a speaker (3) exceeds a predeterminable limit value.

17. A handsfree device as claimed in one of the Claims 11 to 16,
**characterized**
**in that** the handsfree device (6) comprises an arrangement (11) for computing the parameters (20) of the adaptive filter (14) from the autocorrelation function and the cross-correlation function of the input signals (9), while especially the autocorrelation function and/or the cross-correlation function are averaged with time.

18. A handsfree device as claimed in one of the Claims 11 to 17,
**characterized**
**in that** for computing the cross-correlation function the autocorrelation function is scaled and the cross-correlation function is affected by the autocorrelation function.

19. A handsfree device as claimed in one of the Claims 11 to 18,
**characterized**
**in that** the handsfree device comprises switching means (18) which are provided for not using the adaptive filter when there is a coefficient overflow during the computation of the autocorrelation function and/or the cross-correlation function.

20. A handsfree device as claimed in one of the Claims 11 to 19,
**characterized**
**in that** the adaptive filter (14) is a Wiener filter.

## Revendications

1. Appareil radiotéléphonique mobile avec un dispositif mains libres (6) qui présente des moyens de combinaison (30) en vue de la combinaison d'au moins deux signaux d'entrée acoustiques (9) et un filtre adaptatif (14) en vue du filtrage du signal de sortie combiné (23) des moyens de combinaison (30),
**caractérisé en ce**
**qu'**un filtre passe-haut (11) disposé dans la branche d'entrée du filtre adaptatif (14) est prévu en vue du filtrage des signaux d'entrée (9) acoustiques.

2. Appareil radiotéléphonique mobile selon la revendication 1,
**caractérisé en ce**
**que** la fréquence limite du filtre passe-haut (11) se situe dans une gamme de 200 à 400 Hz.

3. Appareil radiotéléphonique mobile selon l'une des revendications 1 ou 2,
**caractérisé en ce**
**qu'**un filtre passe-haut (21) supplémentaire est prévu en vue du filtrage du signal de sortie (23) du filtre adaptatif (14).

4. Appareil radiotéléphonique selon l'une des revendications 1 à 3,
**caractérisé en ce**
**que** la fréquence limite du filtre passe-haut (21) supplémentaire se situe dans une plage de 200 à 400 Hz.

5. Appareil radiotéléphonique mobile selon l'une des revendications 1 à 4,
**caractérisé en ce**
**que** les moyens de combinaison (30) présentent un dispositif d'égalisation du temps de passage (13) en vue de l'égalisation des temps de passage entre les signaux d'entrée (9).

6. Appareil radiotéléphonique mobile selon l'une des revendications 1 à 5,
**caractérisé en ce**
**que** le dispositif d'égalisation du temps de passage (13) présente des moyens de contrôle de plausibilité qui sont prévus pour vérifier si un éloignement constaté et/ou la direction du point de départ des signaux d'entrée (9) vers un orateur (3) dépasse une valeur limite à déterminer préalablement.

7. Appareil radiotéléphonique mobile selon l'une des revendications 1 à 6,
**caractérisé en ce**
**que** le dispositif mains libres (6) présente un dispositif (11) en vue du calcul des paramètres (20) du filtre adaptatif (14) à partir de la fonction d'autocorrélation et de la fonction de corrélation croisée des signaux d'entrée (9), une moyenne temporelle de la fonction d'autocorrélation et/ou de la fonction de corrélation croisée étant en particulier prévue.

8. Appareil radiotéléphonique mobile selon l'une des revendications 1 à 7,
**caractérisé en ce**
**qu'**en vue du calcul de la fonction de corrélation croisée, un cadrage de la fonction d'autocorrélation et une alimentation de la fonction de corrélation croisée avec la fonction d'autocorrélation sont prévus.

9. Appareil radiotéléphonique mobile selon l'une des revendications 1 à 8,
**caractérisé en ce**
**que** le dispositif mains libres présente des moyens de commutation (18) qui sont prévus pour ne pas utiliser le filtre adaptatif en cas de dépassement du coefficient lors du calcul de la fonction d'autocorrélation et/ou de la fonction de corrélation croisée.

10. Appareil radiotéléphonique mobile selon l'une des revendications 1 à 9,
**caractérisé en ce**
**que** le filtre adaptatif (14) est un filtre de Wien.

11. Dispositif mains libres (6) qui présente des moyens de combinaison (30) en vue de la combinaison d'au moins deux signaux d'entrée acoustiques (9) et un filtre adaptatif (14) en vue du filtrage du signal de sortie combiné (23) des moyens de combinaison (30),
**caractérisé en ce**
**qu'**un filtre passe-haut (11) disposé dans la branche d'entrée du filtre adaptatif (14) est prévu en vue du filtrage des signaux d'entrée acoustiques (9).

12. Dispositif mains libres selon la revendication 11,
**caractérisé en ce**
**que** la fréquence limite du filtre passe-haut (11) se situe dans la plage de 200 à 400 Hz.

13. Dispositif mains libres selon l'une des revendications 11 ou 12,
**caractérisé en ce**
**qu'**un filtre passe-haut (21) supplémentaire est prévu en vue du filtrage du signal de sortie (23) du filtre adaptatif (14).

14. Dispositif mains libres selon l'une des revendications 11 à 13,
**caractérisé en ce**
**que** la fréquence limite du filtre passe-haut (21) supplémentaire se situe dans la plage de 200 à 400 Hz.

15. Dispositif mains libres selon l'une des revendications 11 à 14,
**caractérisé en ce**
**que** les moyens de combinaison (30) présentent un dispositif d'égalisation du temps de passage (13) en vue de l'égalisation des temps de passage entre les signaux d'entrée (9).

16. Dispositif mains libres selon l'une des revendications 11 à 15,
**caractérisé en ce**
**que** les dispositifs d'égalisation du temps de passage (13) présentent des moyens de contrôle de plausibilité qui sont prévus pour contrôler si un éloignement et/ou la direction constatés du point de départ des signaux d'entrée (9) vers un orateur (3) dépasse une valeur limite à déterminer préalablement.

17. Dispositif mains libres selon l'une des revendications 11 à 16,
**caractérisé en ce**
**que** le dispositif mains libres (6) présente un dispositif (11) en vue du calcul des paramètres (20) du filtre adaptatif (14) à partir de la fonction d'autocorrélation et de la fonction de corrélation croisée des signaux d'entrée (9), une moyenne temporelle de la fonction d'autocorrélation et/ou de la fonction de corrélation croisée étant en particulier prévue.

18. Dispositif mains libres selon l'une des revendications 11 à 17,
**caractérisé en ce**
**qu'**en vue du calcul de la fonction de corrélation croisée, un cadrage de la fonction d'autocorrélation et une alimentation de la fonction de corrélation croisée avec la fonction d'autocorrélation sont prévus.

19. Dispositif mains libres selon l'une des revendications 11 à 18,
**caractérisé en ce**
**que** le dispositif mains libres présente des moyens de commutation (18) qui sont prévus pour ne pas utiliser de filtre adaptatif en cas de dépassement des coefficients lors du calcul de la fonction d'autocorrélation et/ou de la fonction de corrélation croisée.

20. Dispositif mains libres selon l'une des revendications 11 à 19,
**caractérisé en ce**
**que** le filtre adaptatif (14) est un filtre de Wien.
